# EUROPEAN PATENT APPLICATION

(11) **EP 3 181 529 A1**
(43) Date of publication of application: **21.06.2017**
(21) Application number: 16198230.1
(22) Date of filing: 10.11.2016
(51) Int. Cl.: C03C 3/32, C03C 4/18, C03C 10/00, H01M 10/0562

(54) **METHOD OF MANUFACTURING A CRYSTALLIZED GLASS FOR SECONDARY BATTERY AND AN ELECTRODE COMPRISING SULFIDE**

(30) Priority: 15.12.2015 KR 20150179613
(71) Applicant: Hyundai Motor Company, Seoul 06797 (KR); Kia Motors Corporation, Seoul 06797 (KR); IUCF-HYU (Industry-University Cooperation Foundation Hanyang University), Seoul 04763 (KR)
(72) Inventor: YOON, Yong Sub, 07565 Seoul (KR); MIN, Hong Seok, 16855 Yongin-si, Gyeonggi-do (KR); KIM, Kyung Su, 16930 Yongin-si, Gyeonggi-do (KR); KWON, Oh Min, 21432 Incheon (KR); SHIN, Dong Wook, 13559 Seongnam-si, Gyeonggi-do (KR); PARK, Chan Hwi, 06997 Seoul (KR); OH, Seung Hyun, 12953 Hanam-si, Gyeonggi-do (KR); EOM, Min Yong, 04303 Seoul (KR)
(74) Representative: Isarpatent

(57) **Abstract**

Disclosed is a method of manufacturing a crystallized glass for a secondary battery. The secondary batter include a solid electrolyte comprising sulfide, which can be prepared by synthesizing sulfides using thermal energy and vapor pressure as energy sources. The method of the present invention is suitable for manufacturing a crystallized glass for use as the electrolyte comprising sulfide of the secondary battery. The method includes dispersing two or more kinds of sulfides in a solvent and synthesizing the sulfides under conditions of a temperature equal to or greater than a boiling point of the solvent and high pressure greater than standard atmospheric pressure.

## Description

### TECHNICAL FIELD

The present invention relates to a method of manufacturing an electrolyte or crystallized glass which suitably may be used for a secondary battery. The method may comprise synthesizing a solid electrolyte from sulfides using thermal energy and vapor pressure as energy sources.

### BACKGROUND OF THE INVENTION

Lithium secondary batteries have been used as power sources of various electronic devices, ranging from mobile phones, laptop computers, and small home appliances, to vehicles and large power storage devices, and thus the demand therefor has been increasing. Thus, lithium secondary batteries are required to have high performance, and continuous research thereon has been ongoing.

An electrolyte that has been currently used for a lithium secondary battery is a liquid electrolyte that contains an organic material. Such a liquid electrolyte has high lithium ion conductivity but may be problematic because the liquid may leak, or fire or explosion may occur at high temperature, and hence, improvement in safety feature thereof is required.

Accordingly, the safety-related problems maybe solved by using an inorganic solid electrolyte.

Typically, an inorganic solid electrolyte includes an oxide and a sulfide, and sulfur has higher polarization capability than oxygen, and thus prepared inorganic sulfide-containing solid electrolyte exhibits high ion conductivity.

Among a variety of sulfide- containing solid electrolytes, a solid electrolyte having a crystallized glass structure has excellent lithium ion conductivity, for example, the interfacial resistance inside the electrolyte is negligibly small, thus making it possible to manufacture a battery even using a simple cold compression process.

In the related arts, the crystallized glass solid electrolyte containing sulfide has been mainly produced using a mechanical grinding process, but this technique requires a reactor, the size of which must increase excessively with an increase in production capacity, thus making it unsuitable for mass production.

Furthermore, a zirconia ball, used for the reaction, and a reaction material that is fixed in the reactor cannot be suitably used, undesirably resulting in low yield. Hence, there is a need to increase the yield.

Also, the sulfide-containing crystallized glass solid electrolyte containing sulfide has been prepared using a solid electrolyte synthesis method including a mechanical grinding process and a mixing process, however, because all fabrication devices are connected via pipes, making the maintenance and repair thereof difficult. In addition, because precipitates may be formed during the transport of reactants, and thus limitations are imposed on ability to transport the reactants. Since the material that is highly reactive with water is prepared, it is difficult to maintain and repair. Upon reaction of the precipitate with water, hydrogen sulfide (H₂S) gas, which is harmful to humans, may be generated undesirably. In order to prevent the generation of such gas, in the case where the reaction is carried out in a water-controlled clean room, initial investment and maintenance costs may increase.

There is thus required the development of a novel method of producing a solid electrolyte, such that the solid electrolyte may be more suitably manufactured by mass production than the mechanical grinding process or the mixing process, high yield and stability may be obtained.

### SUMMARY OF THE INVENTION

In preferred aspects, the present invention provides a method of manufacturing an electrolyte comprising sulfide or crystallized glass comprising sulfide for a secondary battery, which may be produced using thermal energy and vapor pressure, instead of conventional methods such as mechanical grinding or milling.

In one aspect, the present invention provides a method of manufacturing an electrolyte comprising sulfide for a secondary battery, which may comprise: dispersing two or more kinds of sulfide compounds in a solvent and synthesizing the electrolyte comprising sulfide. In particular, the electrolyte comprising sulfide may be synthesized under conditions of a temperature equal to or greater than a boiling point of the solvent and a pressure greater than a standard atmospheric pressure. For example, the increased pressure may result from an increased vapor pressure at the temperature condition greater than the boiling point of the solvent.

The term "standard atmospheric pressure" as used herein refers to a unit of pressure as defined as 1 atm, equivalent to 101325 Pa(1.01325 bar), 760 mmHg (torr), 29.92 in Hg or 14.696 psi.

In particular, the present invention provides a method of manufacturing a crystallized glass for a secondary battery which may comprise steps of: a preparation step of dispersing two or more sulfide compounds including lithium sulfide (Li₂S) and phosphorus pentasulfide (P₂S₅) in a solvent and placing the two or more sulfide compounds in a reactor; a synthesis step of synthesizing an electrolyte comprising sulfide; a drying step of drying the electrolyte comprising sulfide ; and a crystallization step of crystallizing the dried electrolyte comprising sulfide by heat treatment.

In particular, a temperature of the inside of the reactor may be equal to or greater than a boiling point of the solvent and a pressure of the inside of the reactor may be greater than standard atmospheric pressure.

Preferably, in the synthesizing step, the electrolyte comprising sulfide may be obtained in a powder form.

In the preparation step, the two or more sulfide compounds suitably may include an amount of about 65 to 85 mole% of Li₂S and an amount of about 15 to 35 mole% of P₂S₅,based on the total mole of the two or more sulfide compounds.

In the preparation step, the solvent suitably may include at least one selected from the group consisting of toluene, xylene, and dibutyl ether.

In the synthesis step, the pressure of the inside of the reactor may be in a range of about 1 to 5 bar by vapor pressure of the solvent.

The drying step suitably may be performed at a temperature greater than the boiling point of the solvent.

In the crystallization step, the heat treatment suitably may be performed at a temperature of about 300 °C or greater.

Further provided is a secondary batter that may comprise the electrolyte comprising sulfide, or the crystallized glass comprising sulfide as described herein.

Other aspects of the invention are disclosed infra.

According to exemplary embodiments of the present invention, when thermal energy is supplied to synthesize an electrolyte comprising sulfide using the sulfide compounds dispersed in a solvent, vapor pressure may increase as a result of the phase change, e.g. evaporation, of the solvent. As such, the synthesis efficiency may be effectively increased using the thermal energy from the increased temperature and thus generated vapor pressure.

Due to improvement in the synthesis method, a process that facilitates the mass production of crystallized glass from the electrode comprising sulfide may be obtained, thus increasing productivity while decreasing initial facility costs and production costs.

Accordingly, since most of the initially supplied powder may be recovered after completion of the synthesis of the crystallized glass, the yield of approximate 100 % maybe obtained.

### BRIEF DESCRIPTION OF THE DRAWINGS

The above and other features and advantages of the present invention will be more clearly understood from the following detailed description taken in conjunction with the accompanying drawings, in which:
FIG. 1 is a flowchart illustrating an exemplary process of manufacturing an exemplary crystallized glass for a secondary battery according to an exemplary embodiment of the present invention;
FIG. 2 illustrates exemplary X-ray diffraction patterns of exemplary crystallized glass samples of Examples and crystallized glass samples of Comparative Examples;
FIG. 3 illustrates exemplary X-ray diffraction patterns of exemplary crystallized glass samples of Examples and crystallized glass samples Comparative Examples; and
FIG. 4 is a graph illustrating exemplary ion conductivity of exemplary crystallized glass samples of Examples and crystallized glass samples of Comparative Examples.

### DETAILED DESCRIPTION

The terminology used herein is for the purpose of describing particular exemplary embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

Unless specifically stated or obvious from context, as used herein, the term "about" is understood as within a range of normal tolerance in the art, for example within 2 standard deviations of the mean. "About" can be understood as within 10%, 9%, 8%, 7%, 6%, 5%, 4%, 3%, 2%, 1%, 0.5%, 0.1%, 0.05%, or 0.01% of the stated value. Unless otherwise clear from the context, all numerical values provided herein are modified by the term "about."

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

Hereinafter, a detailed description will be given of embodiments of the present invention with reference to the appended drawings. However, the present invention is not limited to the following embodiments, which may be changed in various forms. These embodiments are provided to complete the disclosure of the present invention, and to fully describe the present invention to those skilled in the art.

According to the present invention, a method of manufacturing an electrolyte comprising sulfide for a secondary battery, which suitably may be used in producing a crystallized glass. The solid electrolyte comprising sulfide, for example, may be produced using thermal energy as a reaction energy source, instead of impact energy, to address the problems with a conventional mechanical grinding process. As such, when the solid electrolyte may be produced using thermal energy at an atmospheric pressure may need a substantially increased temperature condition, which may be inefficient. Hence, the efficiency of the synthesis reaction may be increased using the vapor pressure of the solvent.

In one aspect of the present invention, the method of manufacturing a electrolyte comprising sulfide for a secondary battery may include dispersing two or more kinds of sulfide compounds or sulfides in a solvent and synthesizing the electrolyte comprising sulfide under conditions of a temperature equal to or greater than the boiling point of the solvent and a pressure greater than standard atmospheric pressure. In particular, the increased pressure during the synthesis may result from an increase in vapor pressure due to the temperature greater than the boiling point of the solvent.

Unless otherwise indicated herein, the term "sulfide" refers a sulfide compound, such as lithium sulfide or a phosphorus pentasulfide.

Specifically, when the solvent in which the sulfides are dispersed may be heated to a temperature equal to or greater than the boiling point of the solvent as being stirred, vapor pressure may be generated as a result of the phase change (i.e. liquid → vapor) of the solvent, thus forming a high-temperature and highpressure atmosphere to thereby increase the sulfide synthesis efficiency.

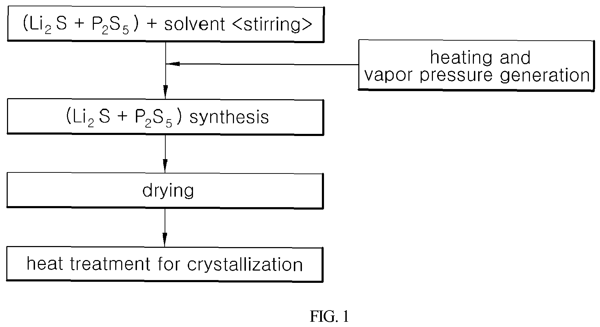

FIG. 1 is a flowchart illustrating an exemplary process of manufacturing crystallized glass for a secondary battery according to an exemplary embodiment of the present invention.

As illustrated in FIG. 1, the method of manufacturing the crystallized glass for a secondary battery according to an exemplary embodiment of the present invention is described below.

### 1) Preparation step

Sulfides may be mixed and dispersed in a solvent. The sulfides may be placed together with the solvent in a reactor, i.e. inside of the reactor, which may endure increased-pressure atmosphere greater than an atmospheric pressure (e.g. 1 atm or 1 bar).

The sulfides used in this preparation step may be different kinds comprising two or more kinds of sulfide compounds, and preferably Li₂S and P₂S₅ may be included. As such, Li₂S and P₂S₅ suitably may be used in amounts of about 65 to 85 mole% and of about 15 to 35 mole%, respectively, based on the total mole of the sulfide compounds (sulfides).

When the amount of Li₂S is less than about 65 mole%, the absolute amount of lithium ions inside the electrolyte may not be sufficient and thus ion conductivity may not be obtained at a predetermined level, such that it may not be applied in all-solid-state batteries. On the other hand, when the amount of Li₂S is greater than about 85 mole%, the relative amount of P₂S₅, which forms an amorphous structure, may be decreased, and thus Li₂S may precipitate, and may not partially participate in the reaction but may remain as an impurity, ultimately deteriorating ion conductivity.

The solvent may have a boiling point ranging from about 100 to 150 °C, for example, toluene, xylene, and dibutyl ether (DBE).

In order to uniformly disperse Li₂S and P₂S₅ in the solvent, the sulfide-mixed solvent may be sufficiently stirred. For example, to induce the uniform mixing (stirring) of starting materials before initial synthesis, the sulfides may be added to the solvent together with a stirring ball (a zirconia ball) and stirred for about 6 to 24 hr.

### 2) Synthesis step

While the inside of the reactor, which contains the sulfide-dispersed solvent, is set to conditions of a temperature equal to or greater than the boiling point of the selected solvent and high pressure greater than the standard atmospheric pressure, the sulfur-based electrolyte may be synthesized. As such, the increased pressure greater than the atmospheric pressure may be preferably achieved using the vapor pressure of the solvent, which may be generated when the inside of the reactor is heated to a temperature equal to or greater than the boiling point of the solvent. Preferably, the sulfur-based electrolyte may be formed in a solid form such as powders.

The reaction pressure formed in the synthesis step suitably may be in the range of about 1 to 5 bar. To this end, the heating temperature of the inside of the reactor may be adjusted so as to satisfy the conditions of the reaction pressure at a temperature equal to or greater than the boiling point of the selected solvent. The reaction pressure formed in the synthesis step may be limited to the range of 1 to 5 bar. When the reaction pressure is less than the predetermined range, for example, less than about 1 bar, the solid electrolyte may not be obtained. Since the pressure is exponentially increased with an increase in the heating temperature, the upper limit of the reaction pressure may be preferably limited to about 5 bar taking into consideration processing efficiency.

In order to prevent the precipitation of the sulfides and the synthesized electrolyte powder and maintain the uniform dispersion thereof, the solvent may be continuously stirred.

### 3) Drying step

After completion of the reaction, the synthesized electrolyte, e.g. solid electrolyte powder, may be dried.

When the powder form electrolyte is dried, the powder electrolyte in the solvent may be filtered. Since the powder electrolyte may be covered with the solvent, the powder may be dried for about 2 hr at a temperature greater than the boiling point of the solvent, for example, at a temperature about 10 °C greater than the boiling point of the solvent.

### 4) Crystallization step

After completion of the drying of the electrolyte powder, the dried electrolyte powder may be heat treated and thus crystallized.

To crystallize the electrolyte powder, heat treatment may be performed at a temperature of about 210 to 320 °C.

The temperature for the heat treatment may be adjusted so as to correspond to the crystallization temperature depending on the kind of sulfide compounds. For example, when the sulfide composition for use in synthesis includes an amount of about 70 mole% of Li₂S and an amount of about 30 mole% of P₂S₅, the heat treatment temperature may be about 300 °C.

The main crystal phase of crystallized glass resulting from sulfide synthesis and crystallization may be preferably Li₇P₃S₁₁, and the crystal phase may include thio-LISICON III and Li₄P₂S₆, with or without Li₇P₃S₁₁.

The ion conductivity of crystallized glass resulting from sulfide synthesis and crystallization may be about 2×10⁻⁴ S/cm or greater in order to realize all-solid-state batteries. In particular, the ion conductivity of crystallized glass is 5×10⁻³ S/cm or greater.

### EXAMPLE

The method of manufacturing a crystallized glass for a secondary battery according to the present invention is described below through the following examples and comparative examples.

### Example 1

1) 2 g of commercially available Li₂S and P₂S₅ were weighed at a molar ratio of 70:30, placed in a 20 ml glass bottle together with 10 ml of toluene and 10 g of a zirconia ball having a diameter of 3 mm, and then mixed at 120 rpm for 24 hr under the condition that the glass bottle was sealed.
2) The zirconia ball was removed from the mixed suspension, and the resulting suspension was placed in a high-temperature/high-pressure reactor together with 90 ml of the additional solvent.
3) The temperature of the reactor was increased to a temperature of 140°C (synthesis temperature) and maintained for 24 hr. To prevent the precipitation of the powder and maintain the uniform dispersion, the suspension was continuously stirred.
4) After termination of the reaction, the synthetic powder was filtered and dried for 2 hr at a temperature 10 °C greater than the boiling point of the solvent.
5) The dried powder was crystallized at a temperature of 300 °C for 3 hr, thus yielding sulfide-containing crystallized glass.

### Example 2

This example was performed in the same manner as Example 1, with the exception that xylene was used as the solvent and the synthesis temperature was changed to a temperature of 180 °C.

### Example 3

This example was performed in the same manner as Example 1, with the exception that dibutyl ether was used as the solvent and the synthesis temperature was changed to a temperature of 165 °C.

### Comparative Example 1

This example was performed in the same manner as Example 1, with the exception that the synthesis temperature was changed to a temperature of 120 °C, and thus, the pressure was less than the standard atmospheric pressure

### Comparative Example 2

This example was performed in the same manner as Example 1, with the exception that the synthesis temperature was changed to a temperature of 100 °C.

### Example 4

This example was performed in the same manner as Example 1, with the exception that the synthesis temperature was changed to a temperature of 160 °C.

### Example 5

This example was performed in the same manner as Example 1, with the exception that Li₂S and P₂S₅ were weighed at a molar ratio of 75:25, the dibutyl ether solvent was used, and the synthesis temperature was changed to a temperature of about 165 °C.

### Example 6

This example was performed in the same manner as Example 5, with the exception that Li₂S and P₂S₅ were weighed at a molar ratio of 80:20.

The production conditions of crystallized glass and the products are shown in the following Table 1 below.

**Table 1**

| NO. | Li₂S (mole% ) | P₂S₅ (mole% ) | Synthesis solvent | Synthesis Temp. (°C) | Vapor pressure (bar) | Main crystal phase | Ion conductivity (S/cm) |
|---|---|---|---|---|---|---|---|
| Ex.1 | 70 | 30 | Toluene | 140 | 1.5 | Li₇P₃S₁₁ | 2.0×10⁻⁴ |
| Ex.2 | 70 | 30 | Xylene | 180 | 1.5 | thio-LISICON III | 2.1×10⁻⁴ |
| Ex.3 | 70 | 30 | Dibutyl ether | 165 | 1.2 | Li₇P₃S₁₁+Li₄P₂S₆ | 6.7×10⁻⁴ |
| C.Ex.1 | 70 | 30 | Toluene | 120 | 0.5 | Li₇P₃S₁₁+Li₄P₂S₆ | 1.0×10⁻⁴ |
| C.Ex.2 | 70 | 30 | Toluene | 100 | 0.0 | Li₄P₂S₆ | 4.2×10⁻⁴ |
| Ex.4 | 70 | 30 | Toluene | 160 | 2.5 | Li₇P₃S₁₁ | 3.0×10⁻⁴ |
| Ex.5 | 75 | 25 | Dibutyl ether | 165 | 1.2 | LISICON III | 2.7×10⁻⁴ |
| Ex.6 | 80 | 20 | Dibutyl ether | 165 | 1.2 | LISICON II+III | 3.1×10⁻⁴ |

As shown in Table 1, when the synthesis temperature was lower than the boiling point of the synthesis solvent, vapor pressure was not sufficiently generated and Li₇P₃S₁₁ was neither synthesized nor crystallized to the desired level, and thus, the ion conductivity of the crystallized glass did not satisfy a desired level (2.0×10⁴ or greater).

The X-ray diffraction pattern results of sulfide-containing crystallized glass samples of Examples and Comparative Examples were analyzed.

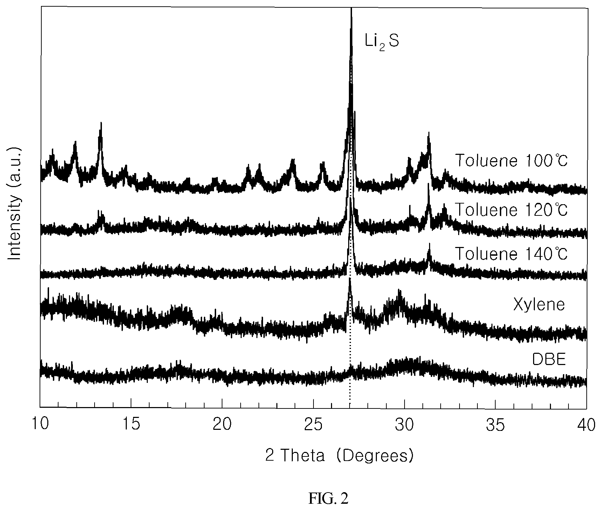

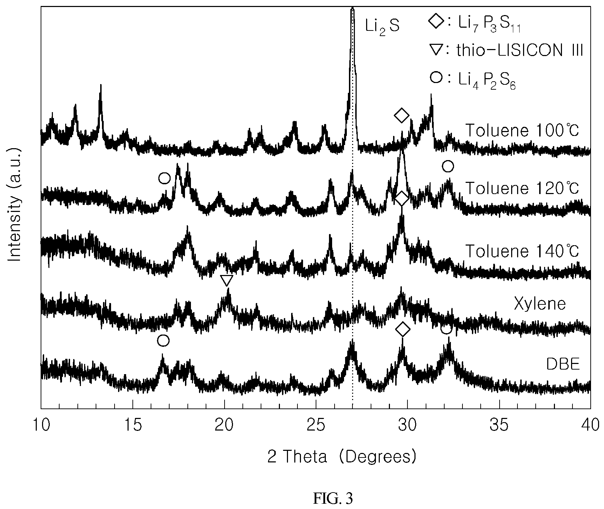

FIGS. 2 and 3 illustrate the X-ray diffraction pattern results of sulfide-containing crystallized glass samples of Examples and Comparative Examples.

As shown in FIG. 2, the sample of Example 3 was produced in the form of complete glass. Except for the sample of Example 3, the other samples exhibited the peak of Li₂S near 27°. Based on the height of the Li₂S peak, the synthesis was efficiently carried out in the sequence of Example 3 > Example 2 > Example 1 > Comparative Example 1 > Comparative Example 2. In particular, the sample of Comparative Example 2, which was synthesized at a temperature equal to or less than the boiling point of the solvent, showed the same X-ray diffraction peak as that of the starting material, indicating that synthesis was not completely carried out. Also, the sample of Comparative Example 1, which was synthesized at a temperature slightly greater than the boiling point of the solvent, showed a significant peak of Li₂S near 27°, indicating that desired glass was not sufficiently formed. Thereby, vapor pressure at a predetermined level or greater can be found to be necessary to crystallizing compounds into glass phase.

FIG. 3 illustrates the X-ray diffraction pattern results of the sulfide- containing crystallized glass samples of Examples and Comparative Examples, the main peak being shown on each crystal phase. In Examples 1, 2 and 3, Li₇P₃S₁₁, thio-LISICON III and Li₇P₃S₁₁+Li₄P₂S₆ phases were respectively precipitated. The Li₄P₂S₆ crystal phase is known to have low lithium ion conductivity. If the precipitation of the Li₄P₂S₆ phase is inhibited, it is possible to increase the conductivity in Example 3. In Comparative Example 1, the Li₇P₃S₁₁+Li₄P₂S₆ phase was shown, and the same crystal phase as the crystallized glass was shown in Comparative Example 2.

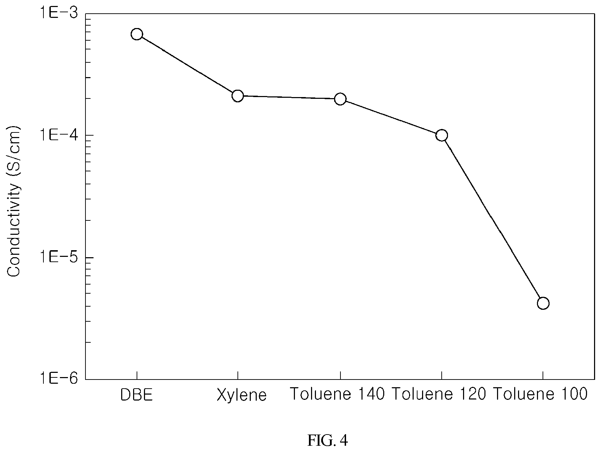

FIG. 4 is a graph illustrating the results of ion conductivity of the sulfide-containing crystallized glass samples of Examples and Comparative Examples.

As shown in FIG. 4, the lithium ion conductivity of each sample was increased in the sequence of Example 3 > Example 2 > Example 1 > Comparative Example 1 > Comparative Example 2, corresponding to the sequence of the reaction efficiency of crystallized glass, indicating that the initial synthesis of sulfide-containing glass had a great influence on the lithium ion conductivity.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method of manufacturing an electrolyte comprising sulfide of a secondary battery, comprising:
dispersing two or more kinds of sulfide compounds in a solvent, and
synthesizing the electrolyte comprising sulfide from the two or more sulfide compounds,
wherein the electrolyte comprising sulfide is synthesized under conditions of a temperature equal to or greater than a boiling point of the solvent and a pressure greater than a standard atmospheric pressure.

2. The method of claim 1, wherein the electrolyte comprising sulfide is synthesized in a solid form.

3. A method of manufacturing a crystallized glass, comprising steps of:
a preparation step of dispersing two or more sulfide compounds comprising lithium sulfide (Li₂S) and phosphorus pentasulfide (P₂S₅) in a solvent and placing the sulfides in a reactor;
a synthesis step of synthesizing a electrolyte comprising sulfide in an inside of the reactor wherein a temperature of the inside of the reactor is set to be equal to or greater than a boiling point of the solvent and a pressure of the inside of the reactor is greater than a standard atmospheric pressure;
a drying step of drying the electrolyte comprising sulfide; and
a crystallization step of crystallizing the dried electrolyte comprising sulfide by heat treatment, to form the crystallized glass.

4. The method of claim 3, wherein in the synthesis step, the electrolyte comprising sulfide is obtained in a powder form.

5. The method of claim 3, wherein in the preparation step, the two or more sulfide compounds comprise an amount of about 65 to 85 mole% of Li₂S and an amount of about15 to 35 mole% of P₂S₅, based on the total mole of the sulfides.

6. The method of claim 3, wherein in the preparation step, the solvent comprises at least one selected from the group consisting of among toluene, xylene, and dibutyl ether.

7. The method of claim 3, wherein in the synthesis step, the pressure is in a range of about 1 to 5 bar by vapor pressure of the solvent.

8. The method of claim 3, wherein the drying step is performed at a temperature greater than the boiling point of the solvent.

9. The method of claim 3, wherein in the crystallization step, the heat treatment is performed at a temperature of about 300 °C or greater.

10. A secondary battery, comprising an electrolyte comprising sulfide manufactured according to claim 1.

11. A secondary battery comprising a crystallized glass manufactured according to claim 3.
